# EUROPEAN PATENT SPECIFICATION

(11) **EP 1 124 740 B1**
(45) Date of publication and mention of the grant of the patent: **26.05.2004**
(21) Application number: 99953238.5
(22) Date of filing: 19.10.1999
(51) Int. Cl.: B65D 85/57, G11B 33/04

(54) **CARTON AND CARTON BLANK**
KARTON UND ZUSCHNITT DAFÜR
POCHETTE PLIANTE EN CARTON ET DECOUPE DE POCHETTE EN CARTON

(30) Priority: 19.10.1998 GB 9822685
(43) Date of publication of application: 22.08.2001
(73) Proprietor: MeadWestvaco Packaging Systems LLC, Stamford, Connecticut 06905 (US)
(72) Inventor: GARNIER, Jean-Michel, F-36100 Issoudun (FR)
(74) Representative: Hepworth, John Malcolm
(86) International application number: PCT/US1999/024513
(87) International publication number: WO 2000/023355

(56) References cited:
- WO-A-98/22370
- CH-A- 473 712
- DE-C- 317 786
- DE-C- 555 632
- DE-U- 29 509 553

## Description

The invention relates to a carton or sleeve for accommodating articles, for example information discs or the like, formed from one or more blanks of paperboard or other suitable foldable sheet material and more particularly to a sleeve capable of being formed into a sealed compartment comprising two or more disc pockets.

Examples of sleeves formed from one or more blanks of cardboard may be found in US 3, 719, 319 which teaches how to create a two-pocket sleeve out of a three-panel blank, nevertheless one of the two pockets of the sleeve is smaller in width than the other because front panel 14 is glued to partition panel 13 along strip 27. In DE 295 09553 there is illustrated a two pocket sleeve, formed from a four panel blank. Other examples of sleeves are illustrated in US 3, 717, 297 and US 3, 688, 898. However, the gluing and folding process of known sleeves is relatively complex and slow.

The present invention and its preferred embodiments seek to overcome or at least mitigate the problems of the prior art.

According to a first aspect of this invention there is provided a sleeve for holding information discs, for example compact discs or the like, which sleeve comprises a back panel having inner and outer opposed faces, a first partition panel foldably connected to one of opposed side edges of the back panel. A front panel is foldably connected to a bottom edge of the back panel, and the partition panel is folded upon the inner face of the back panel to define a first disc pocket between the back panel and the partition panel. The front panel is folded upon the partition panel to define a second disc pocket between the partition panel and the front panel. The front panel comprises securing flaps secured to the outer face of the back panel to retain the partition and front panels in the respective folded positions

Preferably, at least one of the front or back panels comprises a recess to allow a user access to a disc contained in the sleeves.

According to an optional feature of this aspect of the invention, there further comprises a second partition panel foldably connected to the other side edge of the back panel and folded to be interposed between the first partition panel and the front panel so that the second disc pocket is partitioned by the second partition panel into two pocket sections.

According to a second aspect of this invention there is provided a blank for forming a sleeve for holding information discs, as defined in claim 4.

According to a third aspect of this invention there is provided a method of forming a sleeve with two or more disc pockets from a blank , as defined in claim 5.

### Brief Description of the Drawings

Exemplary embodiments of the invention will now be described, by way of example only, with reference to the accompanying drawings in which:
FIGURE 1 is a plan view of a blank for forming a carton according to a preferred embodiment of the invention;
FIGURE 2 illustrates the blank illustrated in FIGURE 1 shown during folding; and
FIGURE 3 is an isometric view of the carton formed from the blank illustrated in FIGURE 1.

### Detailed Description of the Preferred Embodiments

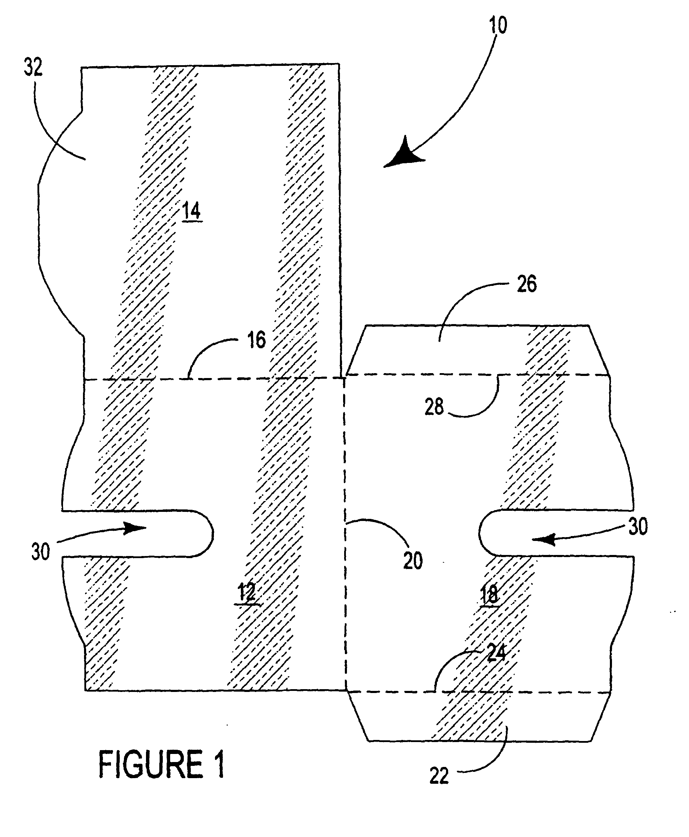

Referring first to FIGURE 1, there is shown a blank 10 for forming a carton (or sleeve) for holding a plurality of articles, for example information discs and the like made from one or more blanks of paperboard or similar foldable sheet material. The blank 10 comprises a back panel 12, a partition panel 14 foldably connected to a side edge of base panel 12 along fold line 16. There further comprises a front panel 18 foldably connected to back panel 12, preferably its bottom edge, along fold line 20.

Securing means is provided to secure the panels together: in this embodiment the securing means comprises a pair of side flaps 22, 26 foldably connected to the opposed side edges of front panel 18 along fold lines 24 and 28 respectively.

The back and/or front panels 12, 18 may optionally comprise one or more recesses 30 to allow a user to access to a disc contained in the sleeve when in use. There may further comprise a protruding portion 32 extending upwardly from an upper part of divider panel 14. In use, the protrusion 32 extends beyond the or each disc contained in the sleeve to provide support and to protect the discs should the sleeve be accidentally dropped. The front and/or back panels 12, 18 may also be provided with a protruding portion.

It is envisaged that a second divider panel (not shown) could be provided along the opposing side edge of back panel 12 opposite fold line 16 to provide a further disc pocket if required. Furthermore, the size of sleeve can be altered according to manufacturing or user requirements. For example, the height or width of the panels can be increased or decreased according to the size of article to be held by the sleeve.

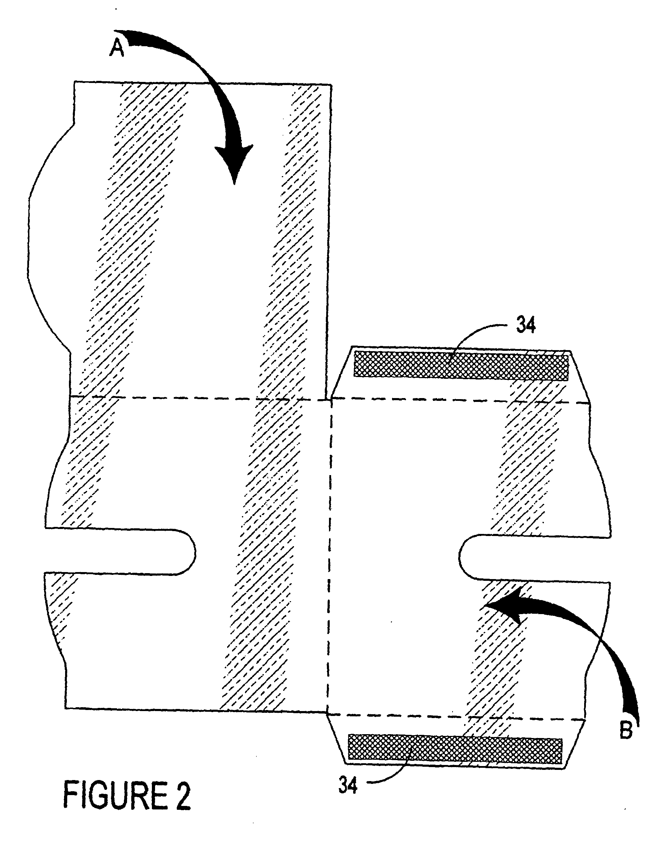

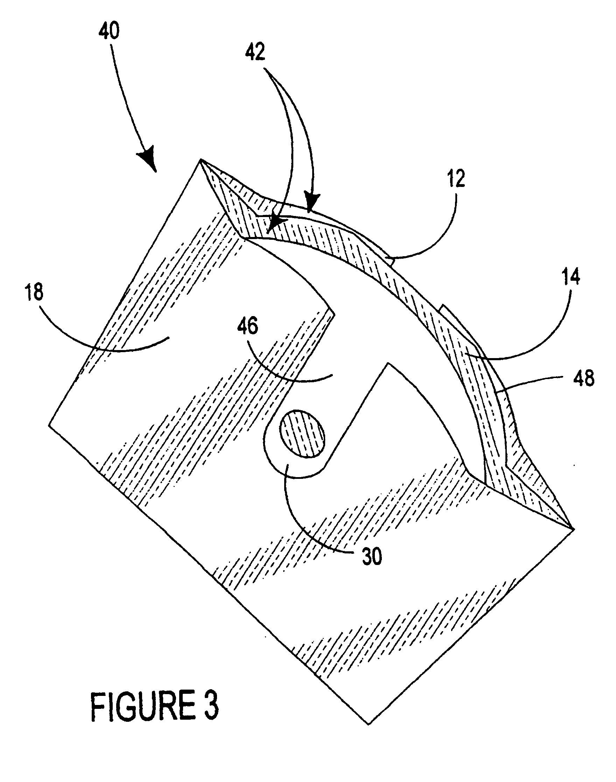

The construction of the carton is illustrated with reference to Figures 2 and 3: in this embodiment, glue 34 is first applied to securing flaps 22 and 26. Divider panel 14 is folded about fold line 16 in direction "A" and into face contacting relationship with back panel 12. Thereafter, front panel 18 is folded about fold line 20 in direction "B" and into face contacting relationship with the opposite face of divider panel 14. Construction is completed by folding securing flaps 22 and 26 about fold lines 24 and 28 respectively into face contacting relationship with the side portions of the outer face of back panel 12 to be secured together by the glue or other means known in the art.

One advantage of the present invention, is that the carton can be formed by a series of sequential folding and gluing operations which can take place in a straight line machine so that the carton is not required to be rotated or inverted to complete its construction. This reduces the time taken to construct a carton. The folding process is not limited to that described below and can be altered according to the particular manufacturing requirements.

Thus, the carton in its completed form is to be supplied to the user so that it can be adapted to provide a sleeve for discs or other like objects. Figure 3 shows a sleeve for holding information discs comprising a back panel 12, a partition panel 14 foldably connected to an edge of back panel 12, a front panel 18 foldably connected to a second edge of the back panel 12. The partition panel 14 and the front panel 18 are folded upon the back panel 12 one after the other to form an envelope 40 with two disc pockets 42.

It can be seen from Figure 3, that a disc 46 can be removed from the disc pockets 42 by using the recess 30 to retrieve the disc from the pockets. Furthermore, the protrusion 32 provides a protective outer edge 48 above the disc, so that it is the edge rather than the disc that makes contact with a surface if dropped. In this embodiment, the diameter of the disc is greater than the height of the front and back panels to aid removal of the disc.

Beneficially, the embodiment of the invention hereinbefore described provides a structure that it sufficiently strong to retain articles and to provide an integral base. The use of paperboard material provides an "environmentally friendly" alternative to sleeves formed from plastic material and the sleeves made from paperboard can include printed matter for marketing purposes.

It will be recognised that as used herein, directional references such as "top", "base", "end", and "side" do not limit the respective panels to such orientation, but merely serve to distinguish these panels from one another. Any reference to hinged connection should not be construed as necessarily referring to a single fold line only: indeed it is envisaged that hinged connection can be formed from one or more of one of the following, a score line, a frangible line or a fold line, without departing from the scope of invention.

The present invention and its preferred embodiment relates to a carton or a sleeve which is shaped to provide satisfactory rigidity to hold items such as compact discs with a degree of flexibility. The shape of the blank minimises the amount of paperboard required for the carton. The carton can be constructed from a flat collapsed condition to a position of use by hand or automatic machinery. It is anticipated the invention can be modified, for example two or more divider panels can be attached to the blank to define a plurality of disc pockets 42, without departing from the scope of the invention. For example, the front and back panels could be a polygonal form, e.g. hexagon, and each side edge of the back panel could be connected to a partition panel foldable to provide a sleeve with multiple disc pockets.

## Claims

1. A sleeve (40) for holding information discs, for example compact discs or the like, which sleeve comprises a back panel (12) having inner and outer opposed faces, a first partition panel (14) foldably connected to one of opposed side edges (16) of the back panel, and a front panel (18) foldably connected to a bottom edge (20) of the back panel, wherein said partition panel is folded upon the inner face of the back panel to define a first disc pocket (42) between the back panel and the partition panel, the front panel is folded upon the partition panel to define a second disc pocket (42) between the partition panel and the front panel, **characterised in that** the front panel comprises securing flaps (22, 26) secured to the outer face of the back panel to retain the partition and front panels in the respective folded positions

2. The sleeve as claimed in claim 1 wherein at least one of the front or back panels comprises a recess (30) to allow a user access to a disc contained in the sleeves.

3. The sleeve as claimed in claim 1 or 2 further comprising a second partition panel foldably connected to the other side edge of the back panel and folded to be interposed between the first partition panel and the front panel so that said second disc pocket is partitioned by the second partition panel into two pocket sections.

4. A blank for forming a sleeve as claimed in any of claims 1 to 3, which blank comprises a back panel (12), at least one partition panel (14) foldably connected to a side edge (16) of the back panel, and a front panel (18) foldably connected to a bottom (20) edge of the back panel, wherein there further comprises a pair of securing flaps (22,26) hingedly connected to opposite side edges (24,28) of the front panel.

5. A method of forming a sleeve (40) with two or more disc pockets (42) from a blank (10) including a back panel (12) having inner and outer opposed faces, at least one partition panel (14) foldably connected to one of opposed side edges (16) of the back panel, a front panel (18) foldably connected to a bottom edge (20) of the back panel, and a pair of securing flaps (22, 26) connected to opposed side edges (24,28) of the front panel, the method comprising the steps of (i) folding the first partition panel into face contacting arrangement with the inner face of the back panel and, possibly, the second partition panel into face contacting arrangement with the first partition panel (ii); folding the front panel into face contacting arrangement with the first, or second, partition panel, and (iii) securing the pair of securing flaps to the outer face of the back panel to retain the partition and front panels in the respective folded positions.

## Patentansprüche

1. Hülle (40) zum Aufbewahren von Schelbendatenträgern, beispielsweise von CDs oder dergleichen, wobei die Hülle eine Rückwandfläche (12) mit gegenüberllegender Innen- und Außenseite aufweist, eine erste Trennwandfläche (14), die faltbar mit einer der gegenüberliegenden Seitenkanten (16) der Rückwandfläche verbunden ist, sowie eine Vorderwandfläche (18), die faltbar mit einer Bodenkante (20) der Rückwandfläche verbunden ist, wobei die Trennwandfläche auf die Innenseite der Rückwandfläche gefaltet ist, um eine erste Scheibentasche (42) zwischen der Rückwandfläche und der Trennwandfläche zu definieren, und die Vorderwandfläche auf die Trennwandfläche gefaltet ist, um eine zweite Scheibentasche (42) zwischen der Trennwandfläche und der Vorderwandfläche zu definieren, **dadurch gekennzeichnet, dass** die Vorderwandfläche Befestigungsklappen (22, 26) umfasst, die an der Außenseite der Rückwandfläche befestigt sind, um die Trennwandfläche und die Vorderwandfläche in den jeweiligen, gefalteten Positionen zurückzuhalten.

2. Hülle nach Anspruch 1, wobei wenigstens die Vorder- oder die Rückseite eine Aussparung (30) umfasst, um dem Benutzer den Zugang zu einer Scheibe zu ermöglichen, die in der Hülle enthalten ist.

3. Hülle nach Anspruch 1 oder 2, wobei die Hülle ferner eine zweite Trennwandfläche umfasst, die faltbar mit der anderen Seitenkante der Rückwandfläche verbunden ist und gefaltet ist, um zwischen der ersten Trennwandfläche und der Vorderwandfläche angeordnet zu sein, so dass die zweite Scheibentasche von der zweiten Trennwandfläche in zwei Taschenabschnitte unterteilt wird.

4. Zuschnitt zum Ausbilden einer Hülle nach einem der Ansprüche 1 bis 3, wobei der Zuschnitt eine Rückwandfläche (12) umfasst, wenigstens eine Trennwandfläche (14), die faltbar mit einer Seitenkante (16) der Rückwandfläche verbunden ist, sowie eine Vorderwandfläche (18), die faltbar mit einer Bodenkante (20) der Rückwandfläche-verbunden ist, wobei ferner ein Paar von Befestigungsklappen (22, 26) umfasst wird, das gelenkig mit gegenüberllegenden Seitenkanten (24, 28) der Vorderwandfläche verbunden ist.

5. Verfahren zum Ausbilden einer Hülle (40) mit zwei oder mehr Schelbentaschen (42) aus einem Zuschnitt (10) einschließlich einer Rückwandfläche (12) mit gegenüberliegender Innen- und Außenseite, wenigstens einer Trennwandfläche (14), die faltbar mit einer der gegenüberliegenden Seitenkanten (16) der Rückwandfläche verbunden ist, einer Vorderwandfläche (18), die faltbar mit einer Bodenkante (20) der Rückenwandfläche verbunden ist, sowie eines Paares von Befestigungsklappen (22, 26), das mit gegenüberliegenden Seitenkanten (24, 28) der Vorderwandfläche verbunden ist, wobei das Verfahren die Schritte umfasst (i) Falten der ersten Trennwandfläche in flächenberührende Anordnung mit der Innenseite der Rückwandfläche und möglicherweise der zweiten Trennwandfläche in flächenberührende Anordnung mit der ersten Trennwandfläche, (ii) Falten der Vorderwandfläche in flächenberührende Anordnung mit der ersten oder der zweiten Trennwandfläche und (iii) Befestigen des Paars von Befestigungskiappen an die Außenseite der Rückwandfläche, um die Trennwandfläche und die Vorderwandfläche in den jeweiligen, gefalteten Positionen zurückzuhalten.

## Revendications

1. Pochette (40) destinée à contenir des disques d'information, par exemple des disques compacts ou similaires, laquelle pochette comprend un panneau arrière (12) ayant des faces intérieure et extérieure opposées, un premier panneau de séparation (14) connecté de manière pliable à l'un des bords latéraux opposés (16) du panneau arrière, et un panneau avant (18) connecté de manière pliable à un bord inférieur (20) du panneau arrière, où ledit panneau de séparation est replié sur la face intérieure du panneau arrière pour définir une première poche (42) à disque entre le panneau arrière et le panneau de séparation, le panneau avant est replié sur le panneau de séparation pour définir une deuxième poche (42) à disque entre le panneau de séparation et le panneau avant, **caractérisée en ce que** le panneau avant comprend des rabats de fixation (22, 26) fixés à la face extérieure du panneau arrière pour retenir le panneau de séparation et le panneau avant dans les positions repliées respectives.

2. Pochette selon la revendication 1, dans laquelle au moins l'un des panneaux avant et arrière comprend un évidement (30) pour permettre à un utilisateur d'accéder à un disque contenu dans la pochette.

3. Pochette selon la revendication 1 ou 2 comprenant en outre un deuxième panneau de séparation connecté de manière pliable à l'autre bord latéral du panneau arrière et plié pour être intercalé entre le premier panneau de séparation et le panneau avant de telle manière que ladite deuxième poche à disque est divisée par le deuxième panneau de séparation en deux sections de poche.

4. Découpe pour former une pochette conforme à l'une quelconque des revendications 1 à 3, laquelle découpe comprend un panneau arrière (12), au moins un panneau de séparation (14) connecté de manière pliable à un bord latéral (16) du panneau arrière, et un panneau avant (18) connecté de manière pliable à un bord inférieur (20) du panneau arrière, la découpe comprenant en outre une paire de rabats de fixation (22, 26) connectés de manière articulée aux bords latéraux opposés (24, 28) du panneau avant.

5. Procédé de formation d'une pochette (40) avec deux poches (42) à disque ou plus à partir d'une découpe (10) comprenant un panneau arrière (12) ayant des faces intérieure et extérieure opposées, au moins un panneau de séparation (14) connecté de manière pliable à l'un des bords latéraux opposés (16) du panneau arrière, un panneau avant (18) connecté de manière pliable à un bord inférieur (20) du panneau arrière, et une paire de rabats de fixation (22, 26) connectés aux bords latéraux opposés (24, 28) du panneau avant, le procédé comprenant les étapes consistant à (i) plier le premier panneau de séparation pour le mettre en contact de surface avec la face intérieure du panneau arrière et, éventuellement, le deuxième panneau de séparation pour le mettre en contact de surface avec le premier panneau de séparation, (ii) plier le panneau avant pour le mettre en contact de surface avec le premier, ou le deuxième, panneau de séparation, et (iii) fixer la paire de rabats de fixation à la face extérieure du panneau arrière afin de retenir les panneaux avant et de séparation dans les positions repliées respectives.
